# EUROPÄISCHE PATENTANMELDUNG

(11) **EP 2 363 771 A1**
(43) Veröffentlichungstag der Anmeldung: **07.09.2011**
(21) Anmeldenummer: 10002240.9
(22) Anmeldetag: 04.03.2010
(51) Int. Cl.: G05B 19/05, G06F 11/36

(54) **Programmierschnittstelle und Verfahren zur Steuerung einer Anwendung eines Gerätes einer industriellen Automatisierungsanordnung**

(71) Anmelder: SIEMENS AKTIENGESELLSCHAFT, 80333 München (DE)
(72) Erfinder: Banik, Thomas, 91058 Erlangen (DE); Kerschbaum, Sven, 91052 Erlangen (DE); Lange, Ronald, 90766 Fürth (DE); Pechmann, Klaus, 90537 Feucht (DE); Talanis, Thomas, 91336 Heroldsbach (DE); Volkmann, Frank, 90475 Nürnberg (DE)

(57) **Zusammenfassung**

Die Erfindung betrifft eine Programmierschnittstelle und ein Verfahren zur Steuerung einer Anwendung (AW) eines Gerätes (G) einer industriellen Automatisierungsanordnung, wobei die Programmierschnittstelle mittels einer Innenschnittstelle (IS) zum Zugriff auf Befehle und Funktionen der Anwendung (AW) eingerichtet ist. Dabei ist die Programmierschnittstelle über eine als ein Funktionsbaustein (FB1, FB2) ausgestaltete Außenschnittstelle (AS) steuerbar, wobei der Funktionsbaustein (FB1, FB2) zur Verwendung mit einer Programmiersprache einer industriellen Automatisierungseinrichtung ausgestaltet ist. Dadurch können Anwendungen (AW) mittels Abläufen gesteuert werden, die in einer in der Automatisierungstechnik gebräuchlichen graphischen Programmiersprache erstellt sind.

## Beschreibung

Die Erfindung betrifft eine Programmierschnittstelle zur Steuerung einer Anwendung eines Gerätes einer industriellen Automatisierungsanordnung gemäß dem Patentanspruch 1, und ein Verfahren für den Zugriff auf eine Programmierschnittstelle gemäß dem Patentanspruch 11.

Geräte in industriellen Automatisierungsanordnungen bestehen regelmäßig aus einer Mikroprozessor-basierten Hardware, auf der eine Anwendung (Software) abläuft. Solche Geräte können beispielsweise Steuerungsgeräte für eine Produktions- oder Prozessautomatisierung sein, die häufig als "CPU" (Central Processing Unit), "PLC" (Programmable Logic Controller) o.ä. bezeichnet werden. Weitere Geräte in diesem technischen Umfeld sind Stationen zum Bedienen und zum Beobachten einer Automatisierungsanordnung, die häufig als "HMI" (Human-Machine-Interface) oder - wegen ihrer häufigen Ausführung als Flachbildschirm-Computer mit berührungsempfindlichem Bildschirm - kurz als "Panels" bezeichnet werden. Die Software für diese Geräte wird im Allgemeinen mittels eines Arbeitsplatzes erstellt, der häufig als "Engineering-System" oder "Engineering-Station" bezeichnet wird. Auch ein solches Engineering-System ist letztlich ein Gerät, welches eine Mikroprozessorbasierte Hardware (meist ein Personal-Computer) aufweist, wobei als Anwendung eine Editor-Software samt eines zugehörigen Compilers, Bibliotheken und weiterem Zubehör darauf betrieben wird. In dem hier betrachteten Kontext sollen als Geräte sowohl die Steuerungsgeräte ("PLC's"), als auch die Bediengeräte ("HMI'S") und die Programmiergeräte ("Engineering-Systeme") betrachtet werden.

Die erwähnten Programmiergeräte dienen sowohl der Erstellung der Software für die Steuerungsgeräte ("PLC's"), als auch der Programmerstellung für die Bediengeräte ("HMI's"). Dabei kommen regelmäßig graphikbasierte Programmiersprachen zum Einsatz, die beispielsweise nach IEC 61131-3 normiert sind, wie z.B. die Programmiersprachen AWL (Anweisungsliste), KOP (Kopplungsplan), FUP (Funktionsplan), Graph o.ä. Solche graphikbasierten Programmiersprachen arbeiten regelmäßig mit Funktionsblöcken, die auf einer Arbeitsfläche angeordnet werden, wobei diese Funktionsblöcke Eingänge und Ausgänge aufweisen, die mittels weiterer graphischer Elemente, beispielsweise Linien, miteinander verschaltet werden. Auf diese Weise werden Beziehungen und Abläufe eines Programms graphisch festgelegt, wonach mittels einer Compilierung ein ablauffähiges Programm erstellt wird, welches auf HMI-Geräten oder PLC's zum Einsatz gebracht werden kann.

Sowohl bei der Bedienung der Programmiergeräte, insbesondere im Zusammenhang mit der Erstellung eines neuen "Projekts", als auch im Betrieb der anderen Geräte (HMI-Geräte, PLC's) kommt es häufig vor, dass ein Bediener bzw. ein Programmierer einen bestimmten Bedienablauf wiederholt durchführen muss oder aber nach einer Anleitung in einer vorbeschriebenen Weise durchführen muss. Prinzipiell lassen sich solche Aufgaben zumindest teilweise automatisieren. Dazu weisen die genannten Geräte im Allgemeinen Programmierschnittstellen, sog. API's (Application Programming Interface), auf, über die bestimmte Funktionen der Geräte in einer ähnlichen Weise gesteuert werden können, wie es auch ein Benutzer durch Betätigen entsprechender Bedienelemente der Benutzeroberflächen machen kann. So lassen sich Vorgänge zumindest teilweise automatisieren, indem sich entsprechende Befehle und Anweisungen in einem sog. Makro oder einem sog. "Skript" oder einer ähnlichen Anweisungsliste speichern lassen, wobei diese Befehlsketten mittels des API's das entsprechende Gerät steuern. Obwohl eine solche teil-automatisierte Bedienung von Geräten viele Vorteile bietet, treten in der Praxis auch einige Nachteile auf. Diese sind zum Einen darin begründet, dass es meist situationsbezogen nicht ausreicht, ein einzelnes Makro o.ä. auszuführen bzw. eine Reihe solcher Anweisungslisten nacheinander auszuführen, sondern dass fallweise Bedingungen, Eingaben o.ä. zu beachten sind, die zu einem fallweise unterschiedlichem Ablauf der automatisierten bzw. teil-automatisierten Steuerung der Geräte führen. Dies führt dazu, dass die verwendeten Makros o.ä. ihrerseits in einen Ablauf, also ein Programm, eingebettet werden müssen, wobei die Verschaltung der verschiedenen Funktionen des oder der Makros eine Logik darstellt ("Glue-Logic"; "Verbindungs-Logik"), die von dem Programmierer oder von dem Bediener erstellt werden muss.

Dazu sind verschiedene Programmiersprachen bekannt, beispielsweise die Sprache "Visual Basic" der Fa. Microsoft. Der Nachteil besteht also darin, dass ein Programmierer oder Bediener, der in einer graphischen Programmiersprache aus dem Umfeld der industriellen Automatisierungstechnik ein Projekt (PLC, HMI) erstellt, in einer weiteren/anderen Programmiersprache die Verbindungslogik und somit das Pogramm für den automatisierten bzw. teil-automatisierten Vorgang erstellen muss. Ein anderer Nachteil des beschriebenen Vorgehens besteht darin, dass für die weitere Programmiersprache, die der Verschaltung von Makros o.ä. und der Erstellung solcher automatisierten Abläufe dient, ein weiterer Editor und ggf. Compiler bereit gehalten werden muss, so dass also neben dem Programmiersystem (Engineering-System), welches zur Erstellung der Programme für die Geräte (HMI-Gerät, PLC) vorgesehen ist, ein weiteres Programmiersystem, nämlich das zur Programmierung und "Verschaltung" der Makros o.ä., bereit gestellt werden muss.

Es ist also eine Aufgabe der vorliegenden Erfindung, die Programmierung von Abläufen, Makros und Zugriffen auf die Programmierschnittstellen von Geräten der industriellen Automatisierungstechnik zu vereinfachen.

Diese Aufgabe wird durch eine Programmierschnittstelle gemäß dem Patentanspruch 1 und durch ein Verfahren gemäß dem Patentanspruch 10 gelöst.

Es ist dabei ein zentraler Gedanke der erfindungsgemäßen Lösung, dass die Außenschnittstelle, also diejenige Schnitt-stelle, auf die ein Makro oder eine andere Abfolge zugreift, einer Programmierschnittstelle für Geräte der Automatisierungstechnik derart zu gestalten, dass sie als ein Funktionsbaustein in einem Programmier-Editor angeordnet werden kann, welcher eine Programmierung mittels einer graphischen Programmiersprache aus dem Umfeld der industriellen Automatisierungsanordnung gestattet.

Die Lösung der Aufgabe sieht insbesondere eine Programmierschnittstelle zur Steuerung einer Anwendung eines Gerätes einer industriellen Automatisierungsanordnung vor, wobei die Programmierschnittstelle mittels einer Innenschnittstelle zum Zugriff auf Befehle und Funktionen der Anwendung eingerichtet ist. Dabei ist die Programmierschnittstelle über eine als ein Funktionsbaustein ausgestaltete Außenschnittstelle steuerbar, wobei der Funktionsbaustein zur Verwendung mit einer graphischen Programmiersprache einer industriellen Automatisierungseinrichtung ausgestaltet ist. Dadurch ist es einem Programmierer für industrielle Automatisierungsanordnungen möglich, die für die Bedienung der Programmierschnittstelle vorgesehenen Befehle und Anweisungen in einer geläufigen Programmiersprache zu formulieren, nämlich einer graphisch orientierte Programmiersprache der Automatisierungstechnik, beispielsweise für die Programmierumgebung Step 7 der Fa. Siemens.

Die Aufgabe wird weiter durch ein Verfahren für den Zugriff auf eine Programmierschnittstelle zur Steuerung einer Anwendung eines Gerätes einer industriellen Automatisierungsanordnung gelöst, wobei mittels einer Innenschnittstelle der Programmierschnittstelle auf Befehle und Funktionen des Gerätes bzw. der Anwendung zugegriffen wird. Dabei wird die Programmierschnittstelle über eine als Funktionsbaustein in einer Programmiersprache einer industriellen Automatisierungseinrichtung ausgebildete Außenschnittstelle angesteuert. Mit diesem Verfahren lassen sich die Vorteile der erfindungsgemäßen Programmierschnittstelle realisieren.

Vorteilhafte Ausgestaltungen der erfindungsgemäßen Programmierschnittstelle sind in den abhängigen Patentansprüchen angegeben. Die dabei beschriebenen Merkmale und Vorteile gelten sinngemäß auch für das erfindungsgemäße Verfahren.

Vorteilhaft wird zum Ablauf eines Programms, welches den Funktionsbaustein zur Steuerung der Programmierschnittstelle aufweist, eine als Software ausgeführte industrielle Automatisierungseinrichtung, eine sog. Soft-PLC, verwendet. Eine solche Soft-PLC kann vorteilhaft mittels eines Personal-Computers bereit gestellt werden, wobei es insbesondere möglich ist, eine solche Soft-PLC auf derselben Hardware (Gerät) ablaufen zu lassen, welche auch eine Programmierumgebung (Engineering-System) bereit stellt. Dies ist insbesondere in den Fällen vorteilhaft, in denen mittels eines Programms, welches auf der Soft-PLC abläuft, als Anwendung das auf der gleichen Hardware-Plattform ablaufende Engineering-System gesteuert werden soll. Alternativ ist es auch möglich, die Soft-PLC auf einer anderen Hardware-Plattform ablaufen zu lassen, als die zu steuernde Anwendung. In beiden Fällen ist ein Datenkanal zwischen der Soft-PLC und der zu steuernden Anwendung notwendig, wobei im letztgenannten Fall dieser Datenkanal vorteilhaft über ein ohnehin bereits vorhandenes Datennetzwerk, beispielsweise ein Feldbussystem oder auch das Internet, eingerichtet wird.

Vorteilhaft ist die Außenschnittstelle, also der Funktionsbaustein, mit Steuerungseingängen versehen, und weist einen über die Steuerungseingänge beeinflussbaren vorprogrammierten Ablauf auf, beispielsweise für eine automatisierte Einrichtung oder Änderung eines Automatisierungsprojektes. Vorteilhaft sind mehrere Funktionsbausteine zum Zugriff auf die Programmierschnittstelle in einem Programm verwendbar, wobei die Außenschnittstellen dieser Funktionsbausteine mittels der Elemente der graphisch orientierten Programmiersprache verknüpfbar und bedienbar sind. Dabei können die Funktionsbausteine jeweils eine echte oder eine unechte Untermenge der verfügbaren Befehle und Funktionen der steuerbaren Anwendung bzw. des zu steuernden Gerätes mittels ihrer Außenschnittstellen zugreifbar abbilden. Weiterhin können verschiedene Funktionsbausteine auch verschiedene vorprogrammierte Abläufe (Programme, Makros, Skripte o.ä.) aufweisen.

Neben dem Anwendungsfall zur Steuerung eines Engineering-Systems (Programmierumgebung) kann das Gerät und dessen Anwendung auch ein Steuerungsgerät der industriellen Automatisierungsanordnung sein (PLC), wobei als die Anwendung eine Laufzeitumgebung für Automatisierungsprogramme steuerbar ist.

Ausführungsbeispiele für eine erfindungsgemäße Programmierschnittstelle werden nachfolgend anhand der Zeichnungen erläutert. Diese dienen gleichzeitig auch der Erläuterung eines erfindungsgemäßen Verfahrens.

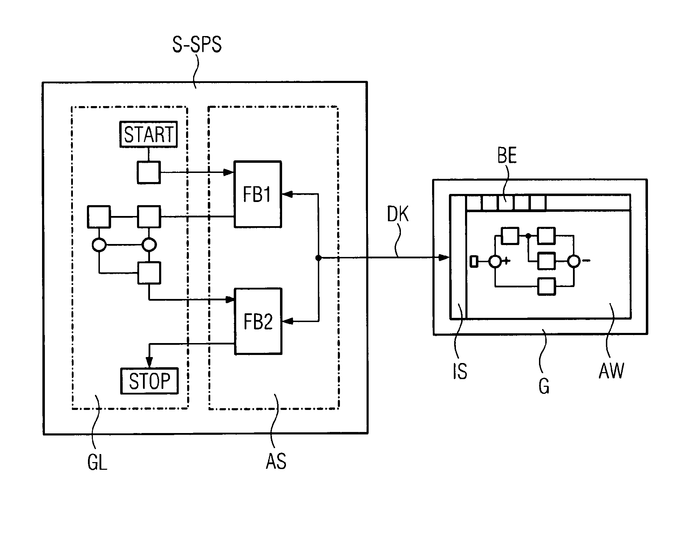

Dabei zeigt die einzige Figur in schematischer Darstellung die Steuerung der Anwendung eines Gerätes mittels einer erfindungsgemäßen Programmierschnittstelle.

In der Figur ist als ein Gerät G der Arbeitsplatz (Engineering-System) eines Benutzers dargestellt, wobei mit der Anwendung AW (hier: Engineering-Software) ein Projekt bearbeitet wird. Das Projekt ist in diesem Fall exemplarisch ein Software-Projekt, mit dessen Hilfe ein Anwendungsprogramm für eine speicherprogrammierbare Steuerung (SPS) erstellt werden soll. Die Anwendung AW weist zu diesem Zweck Bedienelemente BE auf, mit deren Hilfe der Benutzer auf einer graphischen Benutzeroberfläche (Editor) des Gerätes G das Projekt erstellen und gestalten kann. Die Anwendung AW, insbesondere der hier schematisch angedeutete Editor, ist mit einer Programmierschnittstelle (API) ausgestattet, mit deren Hilfe die Anwendung AW gesteuert werden kann. So sind beispielsweise die Funktionen, die über die Bedienelemente BE zugreifbar sind, auch über die Programmierschnittstelle (API) von "außen" steuerbar. In der Figur ist als Innenschnittstelle IS ein Teil der Programmierschnittstelle (API) dargestellt, der in der Anwendung AW für die Verarbeitung der Befehle zuständig ist, welche über die Programmierschnittstelle (API) eingegeben werden.

Der Zugriff auf Befehle und Funktionen der Anwendung AW kann durch eine automatische Bedienung von GUI-Elementen (GUI = Graphical User Interface) geschehen, wobei Maus-Klicks und andere Bedienaktionen eines Benutzers simuliert werden. Dazu bietet sich beispielsweise ein Zugriff mittels des MSAA-Frameworks (MSAA = Microsoft Active Accessability), UIA (User Interface Automation) oder JAB (Java Access Bridge) an. A1-ternativ oder zusätzlich kann auf Befehle und Funktionen auch direkt, d.h. ohne "Umweg" über GUI-Elemente, zugegriffen werden, insbesondere bei einer Steuerung der Laufzeitumgebung bei den PLC's. Dabei ist es z.B. auch möglich, dass einzelne Elemente, z.B. Texte, durch die Innenschnittstelle (IS) der Programmierschnittstelle in einer Zwischenablage des Ziel-Systems (z.B. "Windows-Clipboard") gespeichert und danach durch einen entsprechenden "Einfügen"-Befehl, der in der Anwendung AW ausgeführt wird, in eine Eingabemaske der Anwendung AW übernommen wird.

Über einen Datenkanal DK wird die Innenschnittstelle IS gesteuert. Im Beispiel der Figur ist der Datenkanal DK über ein dem Stand der Technik entsprechendes Datennetzwerk geführt; in diesem Fall, in welchem die Befehle für die Innenschnittstelle IS von einer anderen Hardware-Instanz als dem Gerät G generiert werden, spricht man von einer "Außensteuerung". In einem alternativen und hier nicht figürlich dargestellten Fall kann der Datenkanal DK auch innerhalb eines Gerätes G verlaufen; in diesem Fall spricht man von einer "Innensteuerung".

Die Anwendung AW wird über die Innenschnittstelle IS von einem externen Gerät aus gesteuert, welches eine als Software ausgeführte speicherprogrammierbare Steuerung, eine sog. "Software-SPS" S-SPS ausgeführt ist. In einer alternativen, hier nicht dargestellten Ausführungsform kann auch eine direkt als Hardware ausgeführte speicherprogrammierbare Steuerung (PLC, CPU) verwendet werden. In der Figur ist für die Software-SPS S-SPS ein Programm dargestellt, welches in einer graphischen Programmiersprache erstellt ist und welches aus den Funktionsblöcken FB1, FB2 als Außenschnittstelle AS der Programmierschnittstelle (API) einerseits und einer Verbindungslogik GL ("Glue-Logic") auf der anderen Seite besteht. In den meisten Fällen wird ein solches graphisch programmiertes Programm vor dessen Ausführung kompiliert, d.h. in einen Maschinencode übersetzt. Dieser Schritt ist in der Figur jedoch nicht dargestellt, zum Einen, weil die Kompilierung dem Stand der Technik entspricht, und zum Anderen, weil in einer alternativen Ausführungsform auch eine direkte Ausführung des graphischen Programms durch die Software-SPS S-SPS mittels eines sog. "Interpreters" möglich ist.

Die Verbindungslogik GL ist in der Figur nur schematisch dargestellt; sie kann aus logischen Verknüpfungen, Benutzerabfragen und allen anderen bekannten Elementen der jeweils verwendeten graphischen Programmiersprache bestehen. Insbesondere wird in einer vorteilhaften Ausgestaltung sowohl im Kontext der Anwendung AW als auch für die Verbindungslogik GL dieselbe Programmiersprache verwendet, was den Bedienkomfort erhöht.

Wie bereits erwähnt, ist die Anwendung AW in diesem Ausführungsbeispiel ein Engineering-System für speicherprogrammierbare Steuerungen, beispielsweise das System "Step 7" der Fa. Siemens. Seitens der Software-SPS S-SPS soll nun für die Anwendung AW ein neues Projekt automatisch erstellt werden, wobei in einem oder bevorzugt mehreren Funktionsblöcken FB1, FB2 die entsprechenden Bedienschritte, die dazu von einem Benutzer auszuführen wären, im Sinne eines Makros oder im Sinne eines Skripts (in diesem Zusammenhang analog zu einer Gebrauchsanleitung auch "e-Tuturial" genannt) vorbereitet sind; diese können beispielsweise durch "aufzeichnen" eines realen Bedienablaufs, also durch Registrieren der von einem Benutzer durchgeführten Bedienaktionen, erstellt werden. Die Reihenfolge und Bedingungen, in der und unter denen verschiedene Funktionen dieser Funktionsbausteine FB1, FB2 durchgeführt werden sollen, sind in der Verbindungslogik GL spezifiziert. Dazu weisen die Funktionsblöcke FB1, FB2 bevorzugt Steuereingänge (beispielsweise "Start") und Statusausgänge (beispielsweise "Programm erfolgreich beendet") auf, wobei dann beispielsweise der Start eines späteren Funktionsblocks FB2 vom erfolgreichen Durchlauf eines ersten Funktionsblocks FB1 abhängig gemacht werden kann.

Sobald das durch die Funktionsblöcke FB1, FB2 als Außenschnittstelle AS und die Verbindungslogik GL spezifizierte Programm der Software-SPS S-SPS gestartet wird, wird das entsprechend spezifizierte Projekt für die Anwendung AW automatisch, ggf. unter Einbeziehung der Resultate aus interaktiven Benutzer-Dialogen, aufgebaut.

Bei der bereits erwähnten Alternative, bei der die Software-SPS S-SPS auch auf dem Gerät G installiert ist, kann die Verbindungslogik GL mittels desselben Editors der Anwendung AW erstellt werden, der über die Programmierschnittstelle (API) gesteuert wird. In einem solchen Fall kann die Software-SPS S-SPS als ein weiterer "Task" auf dem Betriebssystem des Gerätes G ablaufen.

In der gleichen Weise, in der als Anwendung AW ein Engineering-System, wie bereits beschrieben, gesteuert wird, kann auch die Laufzeitumgebung eines Controllers o.ä., also einer speicherprogrammierbaren Steuerung, gesteuert werden. So ist es beispielsweise möglich, mittels eines Programms, welches ähnlich wie die Verbindungslogik GL in einer graphischen Programmiersprache erstellt ist, das Laden von Software, den Start, den Halt und andere Funktionen einer speicherprogrammierbaren Steuerung von einem entfernten Gerät aus zu bewerkstelligen.

Die zuvor beschriebene Programmierschnittstelle (API) bietet den Vorteil, dass es bei der Programmierung zu keinem Technologiebruch kommt. Dies bedeutet, dass die Erstellung der Verbindungslogik GL oder allgemein eine Skript-Erstellung in denjenigen Editoren und Sprachen erfolgen kann, die ein Programmierer für speicherprogrammierbare Steuerungen ohnehin kennt und benutzt. Als Beispiel kann innerhalb der Anwendung "Step 7" der Fa. Siemens, also dem gleichnamigen Programmiersystem, ein Skript erstellt werden, das wiederum die Anwendung "Step 7" selbst steuert. Ein weiterer Vorteil ist, dass PLC-Programmiersprachen in der Regel aufwärts kompatibel erweitert werden; das bedeutet, dass derart erstellte Verbindungslogiken GL, Skripte o.ä. weniger häufig geändert werden müssen, als es bei einer Erstellung in einer PC-orientierten Programmier- oder Makrosprache notwendig wäre.

## Patentansprüche

1. Programmierschnittstelle zur Steuerung einer Anwendung (AW) eines Gerätes (G) einer industriellen Automatisierungsanordnung,
wobei die Programmierschnittstelle mittels einer Innenschnittstelle (IS) zum Zugriff auf Befehle und Funktionen der Anwendung (AW) eingerichtet ist,
**dadurch gekennzeichnet,**
**dass** die Programmierschnittstelle über eine als ein Funktionsbaustein (FB1, FB2) ausgestaltete Außenschnittstelle (AS) steuerbar ist, wobei der Funktionsbaustein (FB1, FB2) zur Verwendung mit einer Programmiersprache einer industriellen Automatisierungseinrichtung ausgestaltet ist.

2. Programmierschnittstelle nach Patentanspruch 1,
**dadurch gekennzeichnet,**
**dass** der Funktionsbaustein (FB1, FB2) in einem Programm einsetzbar ist, welches auf einer als Software ausgeführten industriellen Automatisierungseinrichtung abläuft.

3. Programmierschnittstelle nach Patentanspruch 2,
**dadurch gekennzeichnet,**
**dass** die als Software ausgeführte industrielle Automatisierungseinrichtung auf dem Gerät (G) mit der zu steuernden Anwendung (AW) installiert ist.

4. Programmierschnittstelle nach Patentanspruch 2,
**dadurch gekennzeichnet,**
**dass** die als Software ausgeführte industriellen Automatisierungseinrichtung auf einem weiteren Gerät (G) installiert ist, wobei zwischen dem Gerät (G) mit der zu steuernden Anwendung (AW) und dem weiteren Gerät (G) mit der als Software ausgeführten Automatisierungseinrichtung ein Datenkanal (DK) zur Übertragung von Befehlen und Quittierungsmeldungen eingerichtet ist.

5. Programmierschnittstelle nach einem der vorhergehenden Patentansprüche,
**dadurch gekennzeichnet,**
**dass** der Zugriff auf Befehle und Funktionen der Anwendung (AW) mittels einer Bedienung von Bedienelementen einer graphischen Benutzeroberfläche der Anwendung (AW) durch eine Innenschnittstelle (IS) der Programmierschnittstelle erfolgt.

6. Programmierschnittstelle nach einem der vorhergehenden Patentansprüche,
**dadurch gekennzeichnet,**
**dass** die Anwendung (AW) ein Entwicklungssystem zur Erstellung von Programmen einer industriellen Automatisierungseinrichtung ist.

7. Programmierschnittstelle nach Patentanspruch 6,
**dadurch gekennzeichnet,**
**dass** die Außenschnittstelle (AS) einen mittels Steuerungseingängen des Funktionsbausteins (FB1, FB2) beeinflussbaren vorprogrammierten Ablauf für eine automatisierte Einrichtung oder Änderung eines Automatisierungsprojektes aufweist.

8. Programmierschnittstelle nach einem der vorhergehenden Patentansprüche,
**dadurch gekennzeichnet,**
**dass** mehrere Funktionsbausteine (FB1, FB2) zum Zugriff auf die Programmierschnittstelle in einem Programm verwendbar sind, wobei die Außenschnittstellen (AS) der Funktionsbausteine (FB1, FB2) mittels der Elemente der Programmiersprache verknüpfbar und bedienbar sind.

9. Programmierschnittstelle nach Patentanspruch 8,
**dadurch gekennzeichnet,**
**dass** die Funktionsbausteine (FB1, FB2) jeweils eine Untermenge der verfügbaren Befehle und Funktionen der steuerbaren Anwendung (AW) bzw. des zu steuernden Gerätes (G) mittels ihrer Außenschnittstellen (AS) zugreifbar abbilden.

10. Programmierschnittstelle nach einem der vorherigen Patentansprüche,
**dadurch gekennzeichnet,**
**dass** das Gerät (G) ein Steuerungsgerät der industriellen Automatisierungsanordnung ist, wobei als die Anwendung (AW) eine Laufzeitumgebung für Automatisierungsprogramme steuerbar ist.

11. Verfahren für den Zugriff auf eine Programmierschnittstelle zur Steuerung einer Anwendung (AW) eines Gerätes (G) einer industriellen Automatisierungsanordnung, wobei mittels einer Innenschnittstelle (IS) der Programmierschnittstelle auf Befehle und Funktionen des Gerätes (G) zugriffen wird,
**dadurch gekennzeichnet,**
**dass** die Programmierschnittstelle über eine als Funktionsbaustein (FB1, FB2) in einer Programmiersprache einer industriellen Automatisierungseinrichtung ausgebildete Außenschnittstelle (AS) angesteuert wird.
